# DEMANDE DE BREVET EUROPEEN

(11) **EP 1 258 665 A1**
(43) Date de publication de la demande: **20.11.2002**
(21) Numéro de dépôt: 02356075.8
(22) Date de dépôt: 23.04.2002
(51) Int. Cl.: F16L 33/18, F16L 33/207

(54) **Raccord instantané pour tubes déformables**

(30) Priorité: 14.05.2001 FR 0106319
(71) Demandeur: COMAP, F-69008 Lyon (FR)
(72) Inventeur: Le Clinche, Pascal, 69008 Lyon (FR)
(74) Mandataire: Guerre, Dominique

(57) **Abrégé**

Ce raccord comprend un corps rigide (2) comportant, pour le raccordement de chaque tube (5), une partie tubulaire (3) de diamètre extérieur correspondant au diamètre intérieur du tube (5), dans laquelle sont ménagées une première gorge périphérique (9), située du côté de l'extrémité libre de la partie tubulaire, servant de logement à un joint (10) destiné à assurer l'étanchéité avec l'intérieur du tube, et une seconde gorge périphérique (13) servant de logement à une bague d'accrochage (16) présentant sur une surface extérieure des moyens d'accrochage (20) destinés à coopérer avec la surface intérieure du tube (5), la bague d'accrochage (16) étant une bague susceptible de se déformer radialement, et la seconde gorge (13) du corps (2) et la bague d'accrochage (16) présentant des faces d'appui complémentaires (15, 19) inclinées chacune de l'intérieur vers l'extérieur et en direction de l'extrémité libre de la partie tubulaire considérée.

## Description

La présente invention a pour objet un raccord instantané pour tubes déformables, tels que des tubes en matériau composite comprenant une âme métallique, par exemple en aluminium, revêtue de couches de matière synthétique, par exemple de polyéthylène réticulé. De tels types de tubes sont utilisés de plus en plus fréquemment dans la réalisation d'installation de chauffage, pour conduire l'eau chauffée par une chaudière, ainsi que dans les installations sanitaires, pour conduire l'eau sanitaire chaude ou froide.

Des raccords instantanés pour tubes sont connus de longue date, par exemple par le document EP 0 021 795. Dans un tel raccord, chaque tube traverse un élément d'accrochage comportant des griffes ainsi qu'un joint d'étanchéité. L'accrochage du tube et l'étanchéité sont réalisés à l'extérieur du raccord.

Dans le cas de tubes déformables, tels que les tubes en matériaux composites précités, il convient de réaliser un bon accrochage du tube dans le raccord, ainsi qu'une bonne étanchéité malgré le caractère déformable du tube. Le but de l'invention est de fournir un raccord instantané assurant à la fois un bon accrochage et une bonne étanchéité tout en étant compact. En outre, dans la mesure où le raccord est destiné à des tubes composite comportant une âme en aluminium, il convient d'éviter les contacts entre l'âme en aluminium et le fluide, sur la section du tube, et d'éviter les contacts entre le système d'accrochage et la couche d'aluminium. Il convient enfin que ce raccord permette de visualiser le bon emmanchement de chaque tube dans le raccord.

A cet effet, le raccord qu'elle concerne comprend un corps rigide comportant, pour le raccordement de chaque tube, une partie tubulaire de diamètre extérieur correspondant au diamètre intérieur du tube, dans laquelle sont ménagées une première gorge périphérique, située du côté de l'extrémité libre de la partie tubulaire, servant de logement à un joint destiné à assurer l'étanchéité avec l'intérieur du tube, et une seconde gorge périphérique servant de logement à une bague d'accrochage présentant sur une face extérieure des moyens d'accrochage destinés à coopérer avec la surface intérieure du tube, la bague d'accrochage étant une bague susceptible de se déformer radialement. Selon d'invention, la seconde gorge du corps et la bague d'accrochage présentent des faces d'appui complémentaires inclinées chacune de l'intérieur vers l'extérieur et en direction de l'extrémité libre de la partie tubulaire considérée.

Chaque tube destiné à être fixé dans le raccord est simplement emmanché sur une partie tubulaire du raccord. Il doit être noté tant l'étanchéité que l'accrochage sont réalisés au niveau de l'intérieur du tube. Si, après montage, une traction est exercée sur le tube, le tube tend à entraîner vers l'extrémité libre de la partie tubulaire considérée la bague fendue, laquelle tend à augmenter de section par appui de sa face inclinée contre la face inclinée de la gorge du corps dans laquelle elle est logée. Il en résulte une augmentation de la résistance à l'arrachement du tube, qui ne peut pas être dégagé du raccord. Le joint étant disposé du côté de l'extrémité libre de la partie tubulaire, l'étanchéité demeure parfaitement assurée.

Selon une caractéristique préférée de l'invention des moyens d'accrochage de la bague d'accrochage comprennent au moins une arête qui fait saillie vers l'extérieur et qui est destinée à pénétrer dans la surface intérieure du tube.

Suivant une possibilité, le raccord comporte pour chaque partie tubulaire pour le raccordement d'un tube, une coiffe tubulaire rigide, fixée sur le corps, de diamètre intérieur correspondant au diamètre extérieur du tube. Cette solution est intéressante dans le cas de tubes dont la tenue mécanique n'est pas suffisante pour assurer une fixation fiable sur le corps.

Suivant une autre caractéristique de l'invention, chaque partie tubulaire pour le raccordement d'un tube, comporte une collerette destinée à former une butée axiale pour le tube en position montée sur le raccord.

Dans le cas où le raccord comporte une coiffe, le diamètre extérieur de la collerette est inférieur ou égal au diamètre intérieur de la coiffe tubulaire, et la coiffe recouvre également la collerette.

Afin de permettre, dans un tel cas, la visualisation du bon emmanchement du tube, la coiffe tubulaire comporte au moins une fenêtre de visualisation de la position de l'extrémité du tube en position montée sur le raccord, située à proximité de la collerette.

Dans une forme d'exécution de ce raccord la coiffe tubulaire comporte, à son extrémité située du côté du milieu du raccord, une partie en forme de crochet courbé vers l'intérieur, destinée à réaliser l'accrochage de la coiffe sur la collerette du corps. Dans un tel cas, la coiffe est montée de façon irréversible et le raccord est indémontable.

Suivant une possibilité chaque collerette fait partie intégrante du corps. Le corps et la collerette peuvent ainsi être réalisés par exemple en matière synthétique et obtenus par moulage.

Suivant une autre possibilité chaque collerette est distincte du corps et fixée sur celui-ci. C'est ainsi par exemple que le corps est métallique et chaque collerette est en matière synthétique. Cela évite un contact sur la section du tube en appui contre la collerette entre l'âme en aluminium et une partie métallique, ce qui pourrait générer des couples électrolytiques.

Suivant une autre caractéristique de l'invention chaque bague fendue comprend au moins une arête périphérique saillant vers l'extérieur et délimitée d'une part par une surface inclinée de l'intérieur vers l'extérieur et d'une extrémité du raccord vers le milieu de celui-ci, du côté d'introduction du tube et d'autre part par une surface sensiblement perpendiculaire à l'axe de la partie tubulaire considérée, du côté du milieu du raccord. Chaque bague peut comporter une arête ou deux arêtes parallèles et décalées axialement l'une par rapport à l'autre. Il doit être noté que chaque arête peut être continue, sur la périphérie de la bague, ou être constituée par plusieurs tronçons successifs indépendants les uns des autres.

En ce qui concerne le joint, il peut s'agir d'un joint torique, ou d'un joint à une ou plusieurs lèvres.

De toute façon l'invention sera bien comprise, à l'aide de la description qui suit, en référence aux dessins schématiques annexés représentant, à titre d'exemples non limitatifs, plusieurs formes d'exécution de ce raccord.
Figure 1 est une vue en perspective d'un raccord destiné à la liaison entre deux tubes, dont une extrémité est munie d'une coiffe et dont l'autre extrémité ne comporte pas de coiffe ;
Figure 2 est une vue en coupe longitudinale du raccord de figure 1, dans lequel un tube est engagé dans la partie du raccord équipé d'une coiffe ;
Figure 3 est une vue en perspective d'une bague d'accrochage du raccord de figures 1 et 2 ;
Figure 4 est une vue en perspective d'une seconde bague d'accrochage ;
Figure 5 est une vue en perspective d'un joint du raccord de figures 1 et 2 ;
Figure 6 est une vue en coupe par un plan diamétrale du joint de figure 5 ;
Figure 7 est une vue en coupe similaire à figure 6 d'un autre type de joint.

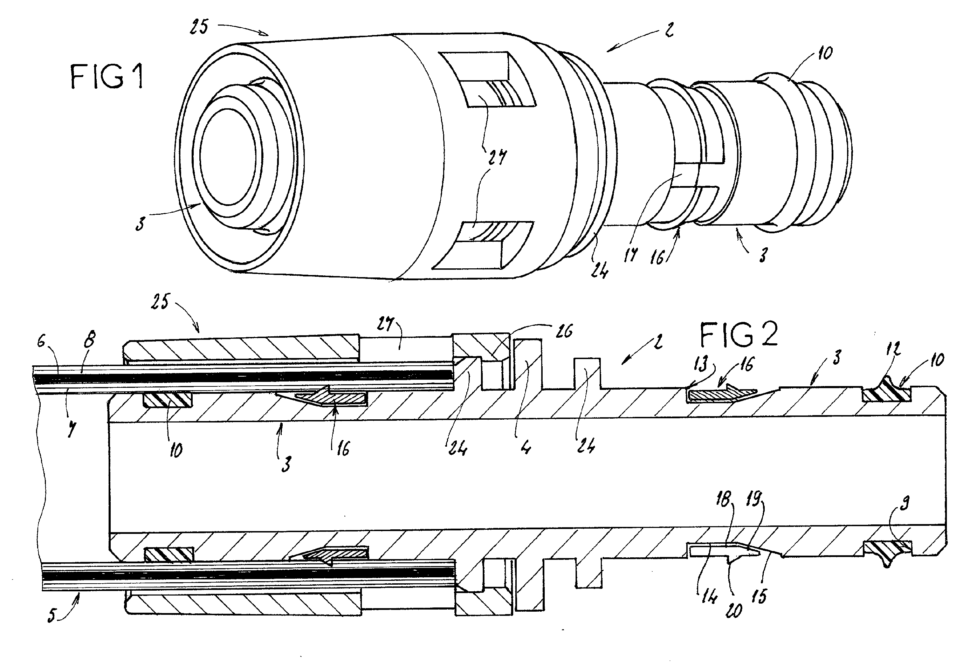

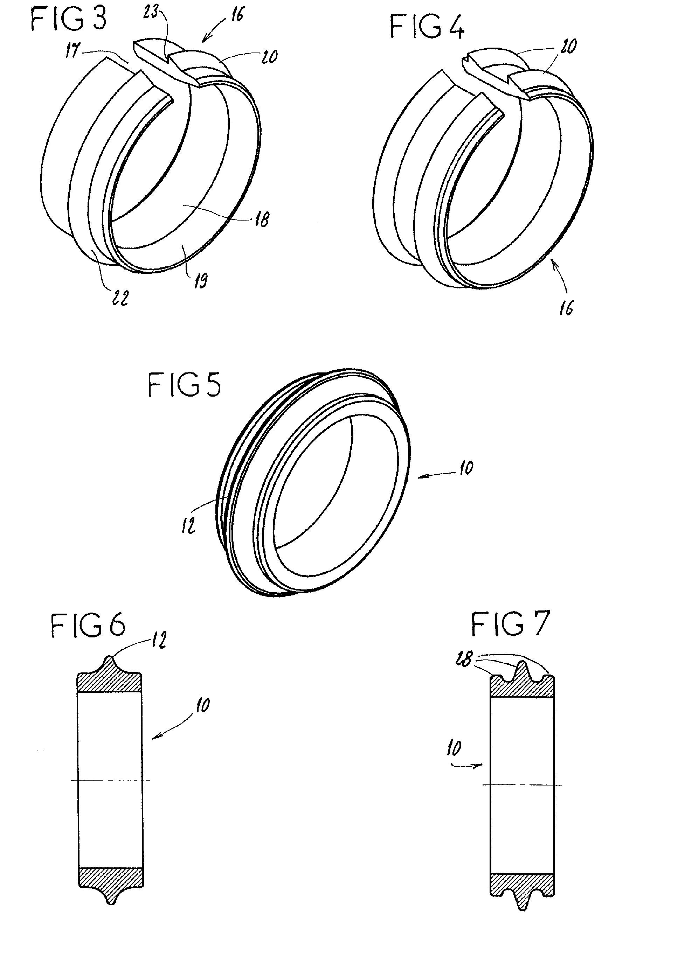

Le raccord représenté aux figures 1 et 2 comprend un corps 2, par exemple en matière synthétique, présentant deux parties tubulaires 3 coaxiales 3, séparées l'une de l'autre par un épaulement central et transversal 4. Le corps 2 est tubulaire, et son diamètre extérieur correspond au diamètre intérieur d'un tube composite 5 comportant une âme 6 en aluminium revêtue sur ses faces intérieure et extérieure de deux couches de matière synthétique 7 et 8, par exemple en polyéthylène réticulé ou non.

Chaque partie tubulaire 3 étant identique, seule l'une d'entre elles est décrite ci-après. Une partie tubulaire 3 comprend, à partir de son extrémité libre, une gorge 9, servant au logement d'un joint 10 comportant une seule lèvre 12, ce joint étant représenté en détail aux figures 5 et 6. Du côté du milieu du raccord, chaque partie tubulaire 3 comporte une gorge 13 présentant du milieu du raccord vers l'extrémité libre de la partie tubulaire, une zone avec un fond 14 parallèle à l'axe de cette partie tubulaire prolongée en direction de l'extrémité libre de cette partie tubulaire par une face inclinée 15 de l'intérieur vers l'extérieur, et du milieu du raccord vers l'extrémité libre de la partie tubulaire. Cette gorge 13 sert au logement d'une bague 16, par exemple en matière synthétique. Cette bague 16, représentée plus en détail à la figure 3, est de préférence mais non exclusivement, une bague ouverte par une fente axiale 17. Cette bague présente une surface d'appui 18 sur la surface 14 de la gorge 13, et une surface 19 de même inclinaison que la surface 15 de la gorge 13, destinée à venir en appui contre cette dernière. Dans la forme d'exécution représentée aux figures 1 à 3, la bague 16 comporte, en tant que moyens d'accrochage, une arête périphérique continue 20 saillant vers l'extérieur et délimitée par une surface 22 inclinée de l'intérieur vers l'extérieur et de l'extrémité libre du raccord vers le milieu de celui-ci, et une face 23 sensiblement perpendiculaire à l'axe de la partie tubulaire considérée, située du côté du milieu du raccord. Chaque partie tubulaire comporte également une collerette périphérique 24 destinée à former une butée axiale pour un tube 5 en position montée sur le raccord. Dans la forme d'exécution représentée au dessin, cette collerette fait partie intégrante du corps 2.

Ce raccord comprend également, entourant chaque partie tubulaire, une coiffe tubulaire 25 rigide, fixée sur le corps, de diamètre intérieur correspondant au diamètre extérieur du tube. Cette collerette a pour fonction d'assurer un parfait maintien du tube 5, notamment si celui-ci est déformable. La coiffe 25 présente, à son extrémité située du côté du milieu du corps, une partie 26 courbée vers l'intérieur, formant un crochet venant s'engager derrière une collerette 24, assurant ainsi un montage irréversible de la coiffe sur le corps. Bien entendu, tout autre mode d'assemblage entre le corps et la coiffe pourrait être envisagé tel que, par exemple, mais non exclusivement, par sertissage d'une pièce métallique ou encore par des filets aménagés sur la coiffe et le corps. Des fenêtres 27 sont prévues dans la coiffe 25, à proximité de la collerette 24, pour visualiser le bon emmanchement d'un tube 5 sur le raccord.

En pratique, l'opérateur engage un tube 5 sur le corps 2, dans l'espace compris entre une partie tubulaire 3 de celui-ci et une coiffe 25, jusqu'à ce que le tube soit en appui contre une collerette 24. Ce mouvement est rendu possible compte tenu de la déformabilité radiale de la bague d'accrochage 16. En position emmanchée, l'arête 20 de la bague 16 pénètre dans la couche intérieure 7 du tube 5, et assure la retenue de celui-ci. L'étanchéité au fluide est réalisée à l'aide du joint 10. Si l'on tente de retirer le tube de façon accidentelle ou non, la face inclinée 19 de la bague prend appui sur la face inclinée 15 de la gorge 13, ce qui tend à augmenter le diamètre de la bague fendue 16 et à améliorer l'accrochage de la bague dans la couche intérieure 7 du tube, rendant impossible le retrait de celui-ci.

La figure 4 représente une variante de la bague 16, dans laquelle sont prévues deux arêtes 20, parallèles et décalées axialement l'une par rapport à l'autre.

La figure 7 représente un joint 10 comportant plusieurs lèvres 28.

Comme il va de soi, l'invention ne se limite pas aux seules formes d'exécution de ce raccord, décrites ci-dessus à titre d'exemples, elle en embrasse au contraire toutes les variantes. C'est ainsi notamment que ce raccord pourrait être un raccord en T, et comporter trois parties tubulaires destinées à recevoir trois tubes. Par ailleurs, ce raccord pourrait ne pas comporter de coiffe tubulaire si les tubes à raccorder sont suffisamment rigides. De même, le joint pourrait être un joint torique, ou plusieurs joints pourraient être prévus, sans que l'on sorte pour autant du cadre de l'invention.

De plus, selon l'exemple illustré, les moyens d'accrochage de la bague comprennent une arête continue. Toutefois, les moyens d'accrochage pourraient comprendre une ou plusieurs arêtes discontinues ou non. De même, les moyens d'accrochage pourraient être réalisés de tout autre manière appropriée dans la mesure où ils sont aptes à engendrer une adhérence, de la bague 16 sur le tube à raccorder 5, suffisante pour que la bague puisse suivre les déplacements du tube notamment lors d'un mouvement de retrait du tube. Ainsi, les moyens d'accrochage pourraient également être réalisés sous la forme d'un moletage croisé définissant une surface rugueuse d'accrochage de la bague sur le tube.

## Revendications

1. Raccord instantané pour tubes déformables, tels que notamment des tubes en matériau composite comprenant une âme métallique, par exemple en aluminium, revêtue de couches de matière synthétique, par exemple de polyéthylène réticulé, **caractérisé en ce qu'**il comprend un corps rigide (2) comportant, pour le raccordement de chaque tube (5), une partie tubulaire (3) de diamètre extérieur correspondant au diamètre intérieur du tube (5), dans laquelle sont ménagées une première gorge périphérique (9), située du côté de l'extrémité libre de la partie tubulaire, servant de logement à un joint (10) destiné à assurer l'étanchéité avec l'intérieur du tube, et une seconde gorge périphérique (13) servant de logement à une bague d'accrochage (16) présentant sur une surface extérieure des moyens d'accrochage (20) destinés à coopérer avec la surface intérieure du tube (5), la bague d'accrochage (16) étant une bague susceptible de se déformer radialement, et la seconde gorge (13) du corps (2) et la bague d'accrochage (16) présentant des faces d'appui complémentaires (15, 19) inclinées chacune de l'intérieur vers l'extérieur et en direction de l'extrémité libre de la partie tubulaire considérée.

2. Raccord instantané selon la revendication 1, **caractérisé en ce qu'**il comporte pour chaque partie tubulaire (3) pour le raccordement d'un tube (5), une coiffe tubulaire rigide (25), fixée sur le corps (2), de diamètre intérieur correspondant au diamètre extérieur du tube (5).

3. Raccord instantané selon l'une des revendications 1 et 2, **caractérisé en ce que** chaque partie tubulaire (3) pour le raccordement d'un tube (5), comporte une collerette (24) destinée à former une butée axiale pour le tube (5) en position montée sur le raccord.

4. Raccord instantané selon l'ensemble des revendications 2 et 3, **caractérisé en ce que** le diamètre extérieur de la collerette (24) est inférieur ou égal au diamètre intérieur de la coiffe tubulaire (25).

5. Raccord instantané selon la revendication 4, **caractérisé en ce que** la coiffe tubulaire (25) comporte au moins une fenêtre de visualisation (27) de la position de l'extrémité du tube (5) en position montée sur le raccord, située à proximité de la collerette (24).

6. Raccord instantané selon l'une des revendications 4 et 5, **caractérisé en ce que** la coiffe tubulaire (25) comporte, à son extrémité située du côté du milieu du raccord, une partie (26) en forme de crochet courbé vers l'intérieur, destinée à réaliser l'accrochage de la coiffe (25) sur la collerette (24) du corps.

7. Raccord instantané selon la revendication 3, **caractérisé en ce que** chaque collerette (24) fait partie intégrante du corps (2).

8. Raccord instantané selon la revendication 3, **caractérisé en ce que** chaque collerette (24) est distincte du corps (2) et fixée sur celui-ci.

9. Raccord instantané selon la revendication 8, **caractérisé en ce que** le corps est métallique et chaque collerette est en matière synthétique.

10. Raccord instantané selon l'une des revendications 1 à 9, **caractérisé en ce que** chaque bague fendue (16) comprend, en tant que moyens d'accrochage, au moins une arête périphérique (20) saillant vers l'extérieur et délimitée d'une part par une surface (22) inclinée de l'intérieur vers l'extérieur et d'une extrémité du raccord vers le milieu de celui-ci, du côté d'introduction du tube et d'autre part par une surface (23) sensiblement perpendiculaire à l'axe de la partie tubulaire considérée, du côté du milieu du raccord.

11. Raccord instantané selon l'une des revendications 1 à 9, **caractérisé en ce que** les moyens d'accrochages comprennent au moins une arête (20) saillant vers l'extérieur et destinée à pénétrer la surface intérieure du tube (5).
